# FASCICULE DE BREVET EUROPEEN

(11) **EP 0 724 856 B1**
(45) Date de publication et mention de la délivrance du brevet: **10.06.1998**
(21) Numéro de dépôt: 96400119.2
(22) Date de dépôt: 18.01.1996
(51) Int. Cl.: A47J 37/08

(54) **Grille-pain électrique et procédé de commande de grillage d'un aliment dans un tel appareil**
Elektrischer Toaster und Verfahren zur Regelung des Toastprozesses eines Nahrungsmittels in einen solchen Vorrichtung
Electric toaster and method for controlling the toasting of a food product in such an apparatus

(30) Priorité: 02.02.1995 FR 9501238
(43) Date de publication de la demande: 07.08.1996
(73) Titulaire: MOULINEX S.A., 75008 Paris (FR)
(72) Inventeur: Basora, Antonio, E-08028 Barcelona (ES); Arnedo, Julian, E-08021 Barcelona (ES)
(74) Mandataire: Busquets, Jean-Pierre

(56) Documents cités:
- AU-B- 6 372 990
- GB-A- 2 289 210
- US-A- 4 454 803
- US-A- 4 518 849
- US-A- 5 128 521
- US-A- 5 283 421
- PATENT ABSTRACTS OF JAPAN vol. 9, no. 229 (M-413), 14 Septembre 1985 & JP-A-60 086329 (MATSUSHITA DENKI SANGYO KK), 15 Mai 1985,

## Description

La présente invention concerne un grille-pain électrique constitué d'un boîtier comprenant au moins une enceinte de grillage avec des moyens de chauffage, un circuit d'alimentation desdits moyens de chauffage, des moyens de sélection d'au moins un niveau de grillage d'un aliment susceptible d'être placé à l'intérieur de l'enceinte de grillage et des moyens de commande qui appliquent un signal de commande de fonctionnement au circuit d'alimentation en fonction des informations reçues des moyens de sélection, lesdits moyens de commande comprenant, entre autres, des moyens de mémorisation d'une pluralité de temps de grillage t, un circuit de commande de durée comportant un premier compteur déterminant une durée de grillage d en fonction des moyens de sélection et des moyens de calcul entre la durée de grillage d déterminée par le premier compteur et le temps de grillage t des moyens de mémorisation pour définir des signaux à appliquer audit circuit d'alimentation, ledit circuit de commande de durée comportant un deuxième compteur d'un temps d'interruption du circuit d'alimentation des moyens de chauffage entre deux périodes successives de fonctionnement.

Dans un tel grille-pain, lorsque des tranches de pain sont insérées à l'intérieur de l'enceinte de grillage, les moyens de commande déterminent des durées de fonctionnement du circuit d'alimentation qui prennent en compte la chaleur résiduelle de l'enceinte de grillage entre deux périodes successives d'utilisation du grille-pain, de telle sorte que le dorage des tranches reflète le niveau de grillage déterminé.

Dans un grille-pain connu de ce genre, tel que décrit dans le document US-A-5 128 521, le temps de grillage de l'aliment est calculé après comparaison entre une première valeur qui est stockée dans les moyens de mémorisation et qui est représentative d'un intervalle de temps prédéfini séparant deux périodes successives de grillage et dans lequel est situé le temps d'interruption calculé, et une seconde valeur stockée dans les moyens de mémorisation et qui est définie en fonction du niveau de grillage sélectionné. Toutefois, un tel processus est relativement compliqué, et le fait de mémoriser la première valeur qui est représentative d'un intervalle de temps prédéfini entraîne un manque de précision quant au grillage souhaité de l'aliment.

Le but de l'invention est de remédier à ces inconvénients en mettant en oeuvre un grille-pain électrique, du type exposé ci-dessus, qui, en tenant compte des moyens de sélection et du temps de refroidissement de l'enceinte de grillage entre deux périodes successives de fonctionnement, détermine un fonctionnement optimal pour obtenir des aliments grillés avec une précision remarquable.

Selon l'invention, les moyens de mémorisation comprennent, d'une part, une première zone M1 de stockage de ce temps d'interruption t1, et, d'autre part, une deuxième zone M2 contenant une pluralité de plages de temps préalablement définies correspondant chacune à un temps de correction t2 de fonctionnement du circuit d'alimentation des moyens de chauffage, et les moyens de commande comprennent des moyens de recherche de corrélation entre la première zone M1 contenant le temps d'interruption t1 calculé et la deuxième zone M2 contenant la pluralité des plages de temps, lesdits moyens de recherche de corrélation délivrant ledit signal de commande.

Selon une autre caractéristique de l'invention, les moyens de recherche de corrélation comportent des moyens d'analyse pour, d'une part, comparer le temps d'interruption t1 calculé avec la pluralité des plages de temps et, d'autre part, déterminer, en fonction du résultat de la comparaison, le temps de correction t2 de fonctionnement du circuit d'alimentation des moyens de chauffage.

Grâce au grille-pain électrique selon l'invention, les aliments sont grillés en fonction des goûts de l'utilisateur en assurant une cohérence maximale entre le niveau de grillage souhaité par l'utilisateur et le niveau de grillage réellement obtenu. En effet, les moyens de commande, d'une part, mémorisant le temps de mise hors circuit t1 du circuit d'alimentation entre deux périodes d'utilisation successives et, d'autre part, assurant une corrélation entre le temps ainsi calculé et des plages de temps prédéterminées, corrigent le temps de grillage dans l'enceinte de grillage en définissant un nouveau temps dit temps de correction t2 à appliquer au circuit d'alimentation pour obtenir des aliments grillés à point. D'autre part, la solution mise en oeuvre pour déterminer le temps de correction t2 simplifie les temps de calcul réalisés par les moyens de commande de manière à diminuer la complexité des circuits électroniques et à minimiser les coûts. En outre, grâce au grille-pain électrique selon l'invention, on supprime les détecteurs de température équipant les grille-pain connus. Cette nouvelle structure minimise l'encombrement à l'intérieur du boîtier du grille-pain et facilite ainsi la réalisation dudit grille-pain.

Les caractéristiques et avantages de l'invention ressortiront d'ailleurs de la description qui va suivre, prise à titre d'exemple non limitatif, en référence aux dessins dans lesquels:
- la figure 1 est une vue schématique en perspective d'un grille-pain auquel est appliqué l'invention ;
- la figure 2 est une représentation schématique illustrant des moyens de commande selon l'invention et destinés à équiper un grille-pain tel que représenté à la figure 1 ;
- la figure 3 est une représentation partielle du schéma électrique du grille-pain équipé des moyens de commande selon l'invention;
- la figure 4 est un schéma fonctionnel illustrant sous forme de blocs, un procédé de commande de grillage du grille-pain selon l'invention.

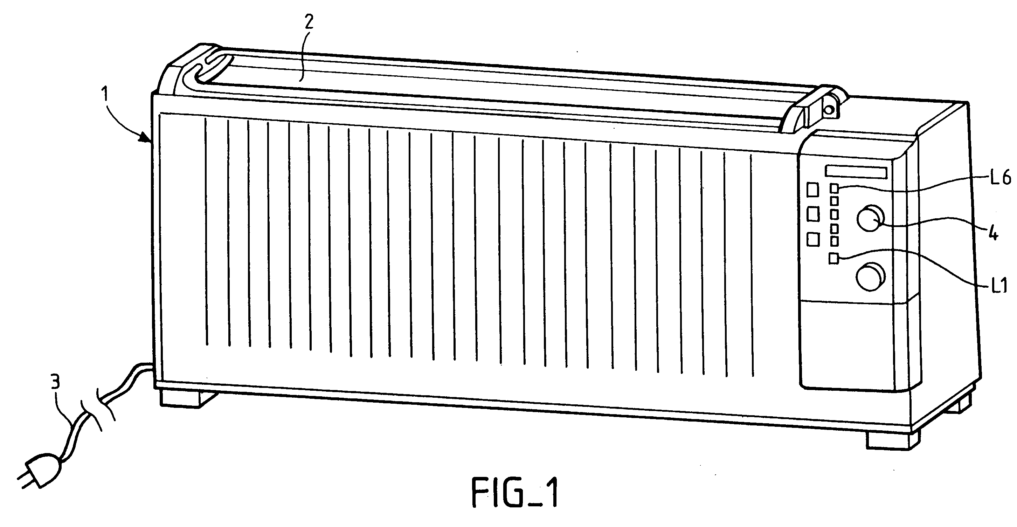

Selon la figure 1, le grille-pain électrique comprend un boîtier 1 comportant au moins une enceinte de grillage 2 avec des moyens de chauffage non représentés, un circuit d'alimentation non représenté relié au secteur par une prise 3 et destiné à alimenter les moyens de chauffage, des moyens de sélection 4 déterminant systématiquement au moins un niveau de grillage d'un aliment susceptible d'être placé à l'intérieur de l'enceinte de grillage 2 et des moyens de commande qui appliquent un signal de commande au circuit d'alimentation en fonction des informations reçues des moyens de sélection 4. Les niveaux de grillage d'un aliment sont définis entre un niveau minimum L1 pour lequel l'aliment est simplement réchauffé avec sensiblement aucune modification de coloration et un niveau maximum L6 pour lequel l'aliment est très grillé avec une coloration très brunâtre. Les niveaux intermédiaires de grillage sont par exemple des niveaux pour lesquels l'aliment est soit moelleux avec une coloration dorée soit croustillant avec une coloration légèrement brunâtre.

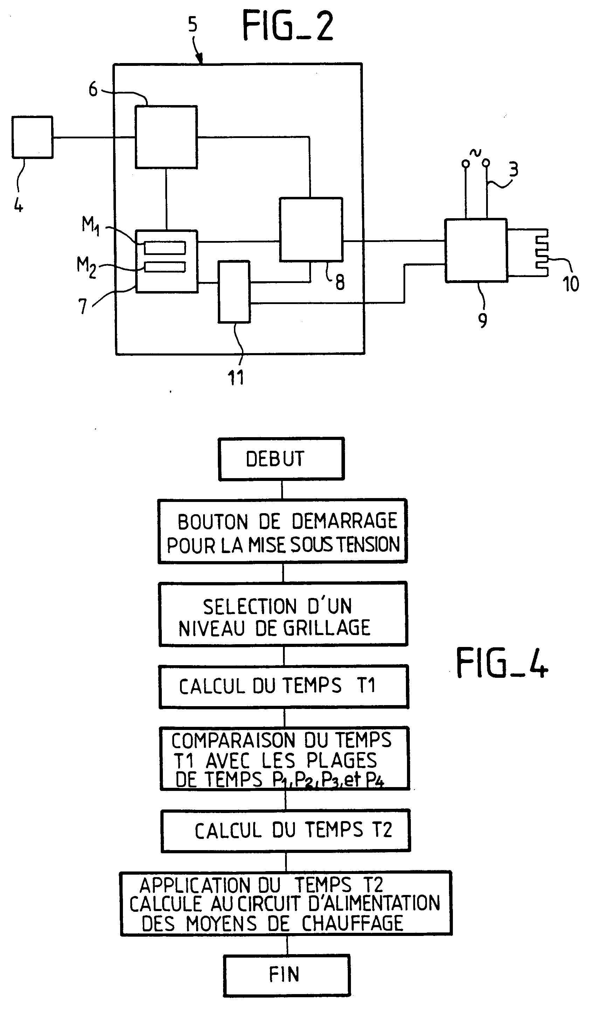

Selon la figure 2, les moyens de commande 5 comprennent, entre autres, des moyens de mémorisation 7 d'une pluralité de temps de grillage t, un circuit de commande de durée 6 de fonctionnement du circuit d'alimentation 9 comportant un premier compteur déterminant une durée de grillage d en fonction des moyens de sélection 4 et des moyens de calcul entre la durée de grillage d déterminée par le premier compteur et la pluralité des temps de grillage t des moyens de mémorisation 7 pour définir des signaux à appliquer audit circuit d'alimentation 9.

Le circuit de commande de durée 6 comporte un deuxième compteur d'un temps d'interruption t1 du circuit d'alimentation 9 des moyens de chauffage 10 calculé entre deux périodes successives de fonctionnement, ledit temps t1 étant stocké dans une première zone M1 des moyens de mémorisation 7.

Les moyens de mémorisation 7 comprennent une deuxième zone M2 contenant une pluralité de plages de temps préalablement définies correspondant chacune à un temps de correction t2 de fonctionnement du circuit d'alimentation 9 des moyens de chauffage 10.

Comme schématisé à la figure 2, les moyens de commande 5 comprennent en outre des moyens de recherche de corrélation 11 entre la première zone M1 contenant le temps t1 et la deuxième zone M2 contenant la pluralité des plages de temps, lesdits moyens de recherche de corrélation 11 délivrant un signal de commande appliqué au circuit d'alimentation 9 des moyens de chauffage 10.

Les moyens de recherche de corrélation 11 comportent des moyens d'analyse non représentés pour, d'une part, comparer le temps t1 avec la pluralité des plages de temps relatives t2 et, d'autre part, déterminer, en fonction du résultat de la comparaison, un temps particulier de correction t2 de fonctionnement du circuit d'alimentation 9 des moyens de chauffage 10.

Selon un mode de réalisation préférentiel obtenu par des essais réalisés par la Demanderesse, les plages de temps présentent une première plage P1 comprenant les temps supérieurs à 6 mn 20, une deuxième plage P2 comprenant les temps entre 2 mn 30 et 6 mn 20, une troisième plage P3 comprenant les temps entre 1 mn et 2 mn 30 et une quatrième plage P4 comprenant les temps inférieurs à 1 mn.

La segmentation des plages de temps ayant ainsi été définie, les moyens d'analyse déterminent, lors de deux périodes successives de fonctionnement du circuit d'alimentation des moyens de chauffage, le temps t2 compte tenu du niveau de grillage sélectionné. Le temps t2 présente ainsi soit une première valeur E1 pour la première plage P1 correspondant à un premier pourcentage R1 du temps t, soit une deuxième valeur E2 pour la deuxième plage P2 correspondant à un deuxième pourcentage R2 du temps t, soit une troisième valeur E3 pour la troisième plage P3 correspondant à un troisième pourcentage R3 du temps t, soit une quatrième valeur V4 pour la quatrième plage P4 correspondant à un quatrième pourcentage R4 du temps t. Les différents pourcentages R1, R2, R3 et R4 sont distribués de manière à comprendre les niveaux de grillage prédéterminés. Selon le mode de réalisation préférentiel, les pourcentages R1, R2, R3 et R4 présentent respectivement les valeurs 100%, 90%, 83% et 80%. Un tel mode de réalisation, d'une part, augmente les performances de grillage du grille-pain grâce à la prise en compte de tous les événements liés à l'enceinte 2 et au circuit d'alimentation 9 des moyens de chauffage 10 et, d'autre part, assure un grillage remarquable de l'aliment répondant à l'attente de l'utilisateur.

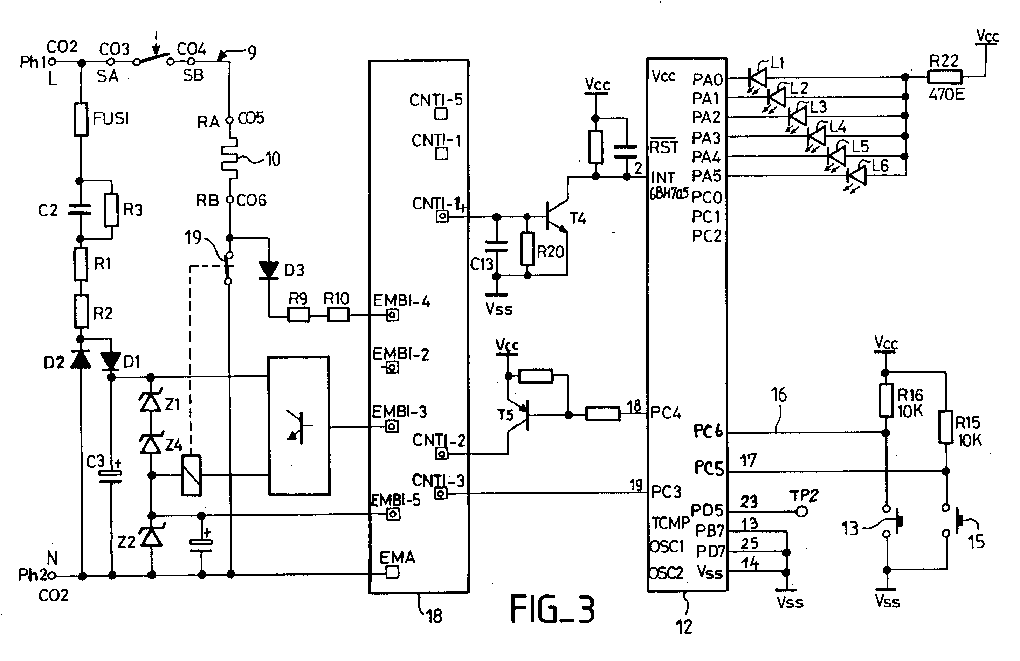

Comme on le voit sur la figure 3, les moyens de commande sont constitués par un microcontrôleur 12 MC 68HC 705 P7 de chez Motorolla. Les moyens de sélection 4 comportent, entre autres, un bouton poussoir 13. Ledit bouton poussoir 13 est relié, entre autres, à un port d'entrée PC6 du microcontrôleur 12 par un moyen de liaison 16. Le nombre d'impulsions que l'utilisateur effectue sur le bouton poussoir 13 détermine un niveau de grillage et constitue une première information qui est transmise au microcontrôleur 12 grâce au moyen de liaison 16. Ladite première information est ensuite traitée par le microcontrôleur 12 qui transmet, sur l'un des ports de sortie PA0 à PA5 dudit microcontrôleur 12, une deuxième information permettant la mise sous tension d'une des leds L1 à L6 reliées aux ports de sortie PA0 à PA5 et déterminant ainsi le niveau de grillage souhaité par l'utilisateur. Un interrupteur 15 assure la mise sous tension du microcontrôleur 12, ainsi que la mise sous tension des différents composants reliés au microcontrôleur 12. Des signaux provenant, entre autres, des ports de sortie PC3 et PC4 du microcontrôleur 12 sont envoyés au circuit d'alimentation 9 des moyens de chauffage 10 par l'intermédiaire d'une interface 18. L'interface 18 transmet ainsi, par l'un des ports de sortie EMB3, une information calculée par le microcontrôleur 12 et commandant l'ouverture et/ou la fermeture d'un relais 19 du circuit d'alimentation 9 des moyens de chauffage 10. A la place du bouton poussoir 13, on pourrait prévoir un potentiomètre et un convertisseur analogique-numérique qui donnerait des signaux au port PC 6.

Afin d'illustrer le fonctionnement du grille-pain selon l'invention, on a représenté en la figure 4 un organigramme correspondant au procédé de commande de grillage d'un aliment dans ledit grille-pain.

Au cours d'une première opération, après que l'utilisateur ait placé un aliment par exemple une tranche de pain dans l'enceinte de grillage, l'utilisateur appuie sur un bouton de démarrage 15 pour déclencher la mise sous tension, d'une part, du circuit d'alimentation des moyens de chauffage et, d'autre part, des moyens de commande et sélectionne un niveau de grillage par les moyens de sélection. Ensuite, au cours d'une deuxième opération, les moyens de commande, d'une part, déterminent le temps d'interruption t1 de fonctionnement entre deux périodes successives de fonctionnement et, d'autre part, comparent le temps d'interruption t1 calculé avec les plages de temps P1, P2, P3 et P4. Enfin, au cours d'une troisième opération, les moyens de commande déterminent le temps de correction t2 à appliquer au circuit d'alimentation des moyens de chauffage.

Dans un exemple d'utilisation, lors d'une première mise en fonctionnement du grille-pain correspondant au premier mode de réalisation, l'utilisateur ayant sélectionné un niveau de grillage N1 de l'aliment, le temps de grillage t associé audit niveau N1 présente une valeur de 120s. Après 140s d'arrêt, le grille-pain est remis en fonctionnement. Les moyens de commande connaissant le temps t=120s ainsi que le temps t1=140s, définissent la plage dans laquelle se situe le temps t1 à savoir, dans notre exemple, la plage P3 (t1=2mn20) et calculent le temps t2 à appliquer au circuit d'alimentation des moyens de chauffage. Ce temps t2 doit donc être de 116,2s pour obtenir le grillage recherché. Il faut noter que grâce à la définition des plages par le fabricant, on assure un grillage régulier et constant pour les différents niveaux de grillage sélectionnés par l'utilisateur et ceci de la première tranche de pain à la énième tranche de pain.

De ce fait, le procédé selon l'invention assure un grillage automatique et optimal de l'aliment. De plus, on améliore le grillage en se rapprochant d'un grillage idéal recherché par tout utilisateur.

## Revendications

1. Grille-pain électrique constitué d'un boîtier (1) comprenant au moins une enceinte de grillage (2) avec des moyens de chauffage (10), un circuit d'alimentation (9) desdits moyens de chauffage (10), des moyens de sélection (4) d'au moins un niveau de grillage d'un aliment susceptible d'être placé à l'intérieur de l'enceinte de grillage (2) et des moyens de commande (5) qui appliquent un signal de commande de fonctionnement au circuit d'alimentation (9) en fonction des informations reçues des moyens de sélection (4), lesdits moyens de commande (5) comprenant, entre autres, des moyens de mémorisation (7) d'une pluralité de temps de grillage (t), un circuit de commande de durée (6) comportant un premier compteur déterminant une durée de grillage (d) en fonction des moyens de sélection (4) et des moyens de calcul entre la durée de grillage (d) déterminée par le premier compteur et le temps de grillage (t) des moyens de mémorisation (7) pour définir des signaux à appliquer audit circuit d'alimentation (9), ledit circuit de commande de durée (6) comportant un deuxième compteur d'un temps d'interruption (t1) du circuit d'alimentation (9) des moyens de chauffage (10) entre deux périodes successives de fonctionnement,
**caractérisé en ce que** les moyens de mémorisation (7) comprennent, d'une part, une première zone (M1) de stockage de ce temps d'interruption (t1) et, d'autre part, une deuxième zone (M2) contenant une pluralité de plages de temps préalablement définies correspondant chacune à un temps de correction (t2) de fonctionnement du circuit d'alimentation (9) des moyens de chauffage (10), et les moyens de commande (5) comprennent des moyens de recherche de corrélation (11) entre la première zone (M1) contenant le temps d'interruption (t1) et la deuxième zone (M2) contenant la pluralité des plages de temps, lesdits moyens de recherche de corrélation (11) délivrant ledit signal de commande.

2. Grille-pain électrique selon la revendication 1,
**caractérisé en ce que** les moyens de recherche de corrélation (11) comportent des moyens d'analyse pour, d'une part, comparer le temps d'interruption (t1) calculé avec la pluralité des plages de temps et, d'autre part, déterminer, en fonction du résultat de la comparaison, le temps de correction (t2) de fonctionnement du circuit d'alimentation (9) des moyens de chauffage (10).

3. Grille-pain électrique selon la revendication 1 ou 2,
**caractérisé en ce que** les plages de temps présentent une première plage (P1) comprenant les temps supérieurs à 6 mn 20, une deuxième plage (P2) comprenant les temps entre 2 mn 30 et 6 mn 20, une troisième plage (P3) comprenant les temps entre 1 mn et 2 mn 30 et une quatrième plage (P4) comprenant les temps inférieurs à 1 mn.

4. Grille-pain électrique selon la revendication 3,
**caractérisé en ce que** compte tenu du temps (t) sélectionné par les moyens de sélection (4), le temps (t2) présente soit une première valeur (E1) pour la première plage (P1) correspondant à un premier pourcentage (R1) du temps (t), soit une deuxième valeur (E2) pour la deuxième plage (P2) correspondant à un deuxième pourcentage (R2) du temps (t), soit une troisième valeur (E3) pour la troisième plage (P3) correspondant à un troisième pourcentage (R3) du temps (t), soit une quatrième valeur (V4) pour la quatrième plage (P4) correspondant à un quatrième pourcentage (R4) du temps (t).

5. Grille-pain électrique selon la revendication 4,
**caractérisé en ce que** le premier pourcentage (R1), le deuxième pourcentage (R2), et troisième pourcentage (R3) et le quatrième pourcentage (R4) présentent respectivement les valeurs 100%, 90%, 83% et 80%.

6. Grille-pain électrique selon l'une quelconque des revendications précédentes,
**caractérisé en ce que** les moyens de commande comportent un microcontrôleur (12).

7. Grille-pain électrique selon la revendication 6,
**caractérisé en ce que** les moyens de sélection comportent un bouton poussoir (13) qui est relié au microcontrôleur (12).

8. Procédé de commande de grillage d'un aliment dans un grille-pain
selon l'une quelconque des revendications 1 à 7, comprenant une première opération dans laquelle, d'une part, on déclenche la mise sous tension du circuit d'alimentation (9) des moyens de chauffage (10) ainsi que des moyens de commande et, d'autre part, on sélectionne un niveau de grillage par les moyens de sélection (4), et une deuxième opération dans laquelle les moyens de commande (5) déterminent le temps d'interruption (t1) de fonctionnement entre deux périodes successives de fonctionnement,
**caractérisé en ce que** les moyens de commande (5) comparent ce temps d'interruption (t1) calculé avec les plages de temps (P1), (P2), (P3) et (P4), et en ce qu'il comprend une troisième opération dans laquelle les moyens de commande (5) déterminent un temps de correction (t2) à appliquer au circuit d'alimentation (9) des moyens de chauffage (10).

## Claims

1. Electric toaster consisting of a casing (1) comprising at least one toasting chamber (2) with heating means (10), a power supply circuit (9) for the said heating means (10), means (4) of selecting at least one toasting level for a foodstuff able to be placed inside the toasting chamber (2) and control means (5) which apply an operating control signal to the power supply circuit (9) in accordance with the information received from the selection means (4), the said control means (5) comprising, amongst other things, means (7) of storing to memory a plurality of toasting times (t), a duration control circuit (6) having a first counter determining a toasting duration (d) in accordance with the selection means (4) and means of calculating between the toasting duration (d) determined by the first counter and the toasting time (t) of the memory means (7) in order to define signals to be applied to the said power supply circuit (9), the said duration control circuit (6) having a second counter for a time (t1) of interruption of the power supply circuit (9) of the heating means (10) between two successive operating periods,
**characterised in that** the memory means (7) comprise on the one hand a first area (M1) for storing this interruption time (t1) and on the other hand a second area (M2) containing a plurality of previously defined time ranges each corresponding to a correction time (t2) for the operation of the power supply circuit (9) of the heating means (10), and the control means (5) comprise means of seeking correlation(11) between the first area (M1) containing the interruption time (t1) and the second area (M2) containing the plurality of time ranges, the said correlation seeking means (11) delivering the said control signal.

2. Electric toaster according to claim 1,
**characterised in that** the correlation seeking means (11) include analysis means for on the one hand comparing the calculated interruption time (t1) with the plurality of time ranges and on the other hand determining, according to the result of the comparison, the correction time (t2) for the operation of the power supply circuit (9) of the heating means (10).

3. Electric toaster according to claim 1 or 2,
**characterised in that** the time ranges have a first range (P1) comprising the times greater than 6 mins 20, a second range (P2) comprising the times between 2 mins 30 and 6 mins 20, a third range (P3) comprising the times between 1 min and 2 mins 30 and a fourth range (P4) comprising the times less than 1 min.

4. Electric toaster according to claim 3,
**characterised in that** taking account of the time (t) selected by the selection means (4), the time (t2) has either a first value (E1) for the first range (P1) corresponding to a first percentage (R1) of the time (t), or a second value (E2) for the second range (P2) corresponding to a second percentage (R2) of the time (t), or a third value (E3) for the third range (P3) corresponding to a third percentage (R3) of the time (t), or a fourth value (E4) for the fourth range (P4) corresponding to a fourth percentage (R4) of the time (t).

5. Electric toaster according to claim 4,
**characterised in that** the first percentage (R1), the second percentage (R2), the third percentage (R3) and the fourth percentage (R4) have respectively the values 100%, 90%, 83% and 80%.

6. Electric toaster according to any one of the preceding claims,
**characterised in that** the control means include a microcontroller (12).

7. Electric toaster according to claim 6,
**characterised in that** the selection means include a push-button (13) which is connected to the microcontroller (12).

8. Method for controlling the toasting of a foodstuff in a toaster according to any one of claims 1 to 7, comprising a first operation in which, on the one hand, the energising of the power supply circuit (9) of the heating means (10), and control means, are triggered and, on the other hand, a toasting level is selected by the selection means (4), and a second operation in which the control means (5) determine the time of interruption (t1) of operation between two successive operating periods,
**characterised in that** the control means (5) compare this calculated interruption time (t1) with the time ranges (P1), (P2), (P3) and (P4), and in that it comprises a third operation in which the control means (5) determine a correction time (t2) to be applied to the power supply circuit (9) of the heating means (10).

## Patentansprüche

1. Elektrischer Toaster, der aus einem Gehäuse (1) besteht, das wenigstens eine Toastkammer (2) mit Heizmitteln (10) aufweist, eine Versorgungsschaltung (9) für die Heizmittel (10), Mittel (4) zur Auswahl wenigstens eines Röstgrades für ein Nahrungsmittel, das im Inneren der Toastkammer (2) angeordnet werden kann, sowie Steuermittel (5), die in Abhängigkeit von den von den Auswahlmitteln (4) empfangenen Informationen ein Betriebssteuersignal an die Versorgungsschaltung (9) anlegen, wobei die Steuermittel (5) unter anderem Mittel (7) zum Speichern einer Vielzahl von Röstzeiten (t) aufweisen, eine Zeitdauerschaltung (6) mit einem ersten Zähler, die eine Röstdauer (d) in Abhängigkeit von den Auswahlmitteln (4) und den Rechenmitteln zwischen der durch den ersten Zähler bestimmten Röstdauer (d) und der Röstzeit (t) der Speichermittel (7) bestimmt, um Signale zu definieren, die an die Versorgungsschaltung (9) anzulegen sind, wobei die Zeitdauersteuerschaltung (6) einen zweiten Zähler für eine Unterbrechungszeit (t1) für die Versorgungsschaltung (9) der Heizmittel (10) zwischen zwei aufeinanderfolgenden Betriebsperioden aufweist,
**dadurch gekennzeichnet, daß** die Speichermittel (7) einerseits eine erste Speicherzone (M1) für diese Unterbrechnungszeit (t1) und andererseits eine zweite Zone (M2) aufweisen, die mehrere vorher definierte Zeitbereiche enthält, die jeweils einer Betriebskorrekturzeit (t2) der Versorgungsschaltung (9) für die Heizmittel (10) entsprechen, und die Steuermittel (5) Mittel (11) zur Korrelationssuche zwischen der ersten Zone (M1), die die Unterbrechungszeit (t1) enthält, und der zweiten Zone (M2) aufweisen, die die Vielzahl von Zeitbereichen enthält, wobei die Korrelationssuchmittel (11) das Steuersignal liefern.

2. Elektrischer Toaster nach Anspruch 1,
**dadurch gekennzeichnet; daß** die Korrelationssuchmittel (11) Analysemittel aufweisen, um einerseits die berechnete Unterbrechungszeit (t1) mit der Vielzahl von Zeitbereichen zu vergleichen und andererseits in Abhängigkeit von dem Ergebnis des Vergleichs die Betriebskorrekturzeit (t2) der Versorgungsschaltung (9) für die Heizmittel (10) zu bestimmen.

3. Elektrischer Toaster nach Anspruch 1 oder 2,
**dadurch gekennzeichnet, daß** die Zeitbereiche einen ersten Bereich (P1) mit Zeiten von mehr als 6 min 20, einen zweiten Bereich (P2) mit Zeiten zwischen 2 min 30 und 6 min 20, einen dritten Bereich (P3) mit den Zeiten zwischen 1 min und 2 min 30 sowie einen vierten Bereich (P4) mit den Zeiten unter 1 min aufweisen.

4. Elektrischer Toaster nach Anspruch 3,
**dadurch gekennzeichnet, daß** unter Berücksichtigung der von den Auswahlmitteln (4) bestimmten Zeit (t) die Zeit (t2) entweder einen ersten Wert (E1) für den ersten Bereich (P1), der einem ersten Prozentanteil (R1) der Zeit (t)entspricht, oder einen zweiten Wert (E2) für den zweiten Bereich (P2), der einem zweiten Prozentanteil der Zeit (t) entspricht, oder einen dritten Wert (E3) für den dritten Bereich (P3) der einem dritten Prozentanteil (R3) der Zeit (t) entspricht, oder aber einen vierten Wert (E4) für den vierten Bereich (P4) besitzt, der einem vierten Prozentanteil (R4) der Zeit (t) entspricht.

5. Elektrischer Toaster nach Anspruch 4,
**dadurch gekennzeichnet, daß** der erste Prozentanteil (R1), der zweite Prozentanteil (R2), der dritte Prozentanteil (R3) und der vierte Prozentanteil (R4) die Werte 100 % bzw. 90 %, 83 % und 80 % aufweisen.

6. Elektrischer Toaster nach einem der vorhergehenden Ansprüche,
**dadurch gekennzeichnet, daß** die Steuermittel eine Mikrosteuereinheit (12) aufweisen.

7. Elektrischer Toaster nach Anspruch 6,
**dadurch gekennzeichnet, daß** die Auswahlmittel eine Drucktaste (13) aufweisen, die mit der Mikrosteuereinheit (12) verbunden ist.

8. Verfahren zum Steuern des Röstens eines Nahrungsmittels in einem Toaster nach einem der Ansprüche 1 bis 7, das eine erste Operation umfaßt, bei der einerseits das Unterspannungsetzen der Versorgungsschaltung (9) für die Heizmittel (10) sowie der Steuermittel ausgelöst wird und andererseits durch die Auswahlmittel (4) ein Röstgrad ausgewählt wird, sowie eine zweite Operation, bei der die Steuermittel (5) die Betriebsunterbrechungszeit (t1) zwischen zwei aufeinanderfolgenden Betriebsperioden bestimmen,
**dadurch gekennzeichnet, daß** die Steuermittel (5) diese berechnete Unterbrechungszeit (t1) mit den Zeitbereichen (P1), (P2), (P3) und (P4) vergleichen, und daß es eine dritte Operation umfaßt, bei der die Steuermittel (5) eine Korrekturzeit (t2) bestimmen, die an die Versorgungsschaltung (9) für die Heizmittel (10) anzulegen ist.
